# EUROPEAN PATENT SPECIFICATION

(11) **EP 2 174 861 B1**
(45) Date of publication and mention of the grant of the patent: **27.06.2018**
(21) Application number: 09012764.8
(22) Date of filing: 08.10.2009
(51) Int. Cl.: B62K 19/12, B62K 11/04

(54) **Seat frame and saddle-riding type transporter including the same**
Sitzrahmen und Grätschsitztransporter, der diesen Rahmen enthält
Cadre de siège et transporteur à monture l'incluant

(30) Priority: 09.10.2008 JP 2008262894
(43) Date of publication of application: 14.04.2010
(73) Proprietor: Yamaha Hatsudoki Kabushiki Kaisha, Shizuoka-ken Shizuoka 438-8501 (JP)
(72) Inventor: Suzuki, Takaharu, Shizuoka-ken 438-8501 (JP); Tominaga, Shuji, Shizuoka-ken 438-8501 (JP); Tsukamoto, Kenji, Shizuoka-ken 438-8501 (JP)
(74) Representative: Stöckeler, Ferdinand

(56) References cited:
- EP-A- 1 459 969
- EP-A- 1 550 605
- EP-A- 1 964 759
- JP-A- 1 317 886
- JP-A- 2007 246 090

## Description

### BACKGROUND OF THE INVENTION

### 1. Field of the Invention:

The present invention relates to a seat frame, and in particular to a seat frame including a frame member formed of a magnesium alloy or an aluminum alloy by casting. The present invention also relates to a saddle-riding type transporter including such a seat frame.

### 2. Description of the Related Art:

Conventionally, steel has been used as a material of many elements of transporters such as motorized vehicles and the like because of having excellent mechanical properties and processability and costing low. Today, however, transporters need to be lightweight in order to provide improved fuel consumption and running performance. Thus, use of a material more lightweight than steel has been studied.

Recently, low-cost methods for refining titanium, aluminum, magnesium and the like having a lower specific gravity than steel and methods for producing alloys containing such metals have been developed. Technologies for improving the strength and the processability of these alloys have also been developed. Thus, it is now proposed to use alloys of titanium, aluminum and magnesium as materials of elements of transporters.

In the case of, for example, a motorcycle, it is preferable that a seat frame provided below a rider seat and a passenger seat (disclosed in, for example, Japanese Laid-Open Patent Publication No. 2006-240345) is formed of a magnesium alloy or an aluminum alloy. By decreasing the weight of the seat frame, the fuel consumption and the running performance of the transporters can be more improved.

Such structural elements as mentioned above can have a high strength by being integrally produced by casting such as diecasting or the like. Casting allows a structural element of even a complicated shape to be produced to have a desirable shape in one step. This can reduce the number of production steps and so reduce the time and cost of production.

However, it has been found that a seat frame of a magnesium alloy or an aluminum alloy produced by casting has the following problems.

A seat frame includes a pair of frame members each extending in a vehicle length direction. According to a known structure, each frame member includes two side walls and a top wall for connecting top ends of these side walls (i.e., having a U-shaped cross-section). A large load is applied on the top wall because a rider seat on which a rider may get astraddle and a passenger seat on which a passenger may get astraddle are attached to the top wall. A magnesium alloy and an aluminum alloy both have a lower strength per unit area than steel. For this reason, it is preferable that a frame member formed of a magnesium alloy or an aluminum alloy has a larger thickness in the top wall than in the side walls.

However, when the thickness of the top wall is made larger, the thickness is made different (or the thickness difference is increased) between the top wall and the side walls. As a result, the cooling rate at the time of casting is made different (or the difference in the cooling rate is increased) between the top wall and the side walls. Therefore, a shrinkage crack or a shrinkage porosity becomes likely to be generated at a border between the top wall and each side wall. The shrinkage crack is generated due to the shrinkage caused by the solidification of molten metal. The shrinkage porosity is generated by the same cause. The shrinkage crack and the shrinkage porosity are likely to be generated especially in a frame member formed of a magnesium alloy or an aluminum alloy. A seat frame having a casting defect such as a shrinkage crack or a shrinkage porosity may be occasionally unusable as a structural element of the motorcycle.

JP 2007 246090 A, which is considered as the closest prior art, discloses a motorcycle including a frame disposed below a seat, the frame includes a pair of right and left longitudinal extending parts extending in the longitudinal direction of the car body of the motorcycle through the lower side of the seat. The respective longitudinal extending parts are formed to have a U-shaped section and be opened downward by a car body outer vertical wall of the motorcycle. A car body inner vertical wall and an upper wall connect both of these walls. In the car body inner wall part, a wall part extending in the longitudinal direction of the car body of the motorcycle is further erected inward in the car width direction of the motorcycle. In order to overcome the problems described above, preferred embodiments of the present invention suppress the generation of a casting defect which would otherwise occur to the frame members of a seat frame when being formed of a magnesium alloy or an aluminum alloy by casting.

This object is achieved by a seat frame according to claim 1.

In a preferable embodiment, the pair of frame members each further include a third region in which the top end of the first side wall and a portion below the top end of the second side wall are connected to each other by the connecting wall; and the third region is located between the first region and the second region.

In a preferable embodiment, the second region extends to a position at least 50 mm away rearward from a central axis of the through-hole.

In a preferable embodiment, in the second region, a height from a top surface of the connecting wall to the top end of the first side wall and a height from the top surface of the connecting wall to the top end of the second side wall increase toward the attaching section.

In a preferable embodiment, at an end of the second region on the attaching section side, the height from the top surface of the connecting wall to the top end of the first side wall and the height from the top surface of the connecting wall to the top end of the second side wall are each 6 mm or larger.

In a preferable embodiment, the connecting wall has a hole in the vicinity of the attaching section.

In a preferable embodiment, the hole is a through-hole.

In a preferable embodiment, in the second region, a distance between the first side wall and the second side wall is 12 mm or shorter.

In a preferable embodiment, the first side wall and the second side wall each have a thickness of 2 mm or larger.

In a preferable embodiment, in the second region, the pair of frame members each include a curved portion curved with respect to a vehicle length direction.

A saddle-riding type transporter according to the present invention comprises a seat; and the seat frame having the above-described structure for supporting the seat.

In the seat frame according to the present invention, a pair of frame members formed of a magnesium alloy or an aluminum alloy by casting each include a "first region" in which the top end of the first side wall and the top end of the second side wall are connected to each other by the connecting wall, and a "second region" in which the portion below the top end of the first side wall and the portion below the top end of the second side wall are connected to each other by the connecting wall. In the first region, the top end of the first side wall and the top end of the second side wall are connected to each other by the connecting wall. Therefore, a top portion of each frame member has a U-shaped cross-section. In the second region, the portion below the top end of the first side wall and the portion below the top end of the second side wall are connected to each other by the connecting wall. Therefore, the top portion of each frame member has an H-shaped cross-section.

As described above, the frame members of the seat frame according to the present invention each include two regions having different cross-sectional structures. An H-shaped cross-section has a higher strength than a U-shaped cross-section. Therefore, as compared with the conventional seat frame in which the frame members entirely have a U-shaped cross-section, the seat frame having the second region (having an H-shaped cross-section) in a part of each frame member has a higher strength. For this reason, the connecting walls do not need to be thick, and so the thickness difference between the connecting walls and the side walls (the first side walls and the second side wall) can be smaller. This can decrease the difference in the cooling rate at the time of casting between the connecting walls and the side walls, which can suppress the generation of shrinkage cracks or shrinkage porosities.

With the H-shaped cross-section, the top end of the first side wall and the top end of the second side wall protrude more upward than the top surface of the connecting wall. Therefore, in the case where the frame members entirely have the H-shaped cross-section, it is difficult to attach a seat to the frame members. However, in the seat frame according to the present invention, the seat fixing section for fixing the seat is located in each first region (having the U-shaped cross-section). Therefore, the seat can be fixed easily. Namely, according to the present invention, the generation of casting defects can be suppressed without obstructing the fixation of the seat.

It is preferable that each of the frame members may further include a "third region" in which the top end of the first side wall and the portion below the top end of the second side wall are connected to each other by the connecting wall. In the third region, the top end of the first side wall and the portion below the top end of the second side wall are connected to each other by the connecting wall. Therefore, the top portion of each frame member has an h-shaped cross-section. In the case where such a third region is located between the first region and the second region, the first side wall and the second side wall can act as a positioning section usable for attaching the seat. This further facilitates the attachment of the seat.

The frame members each include an attaching section, in a front end portion thereof, for attaching the seat frame to the main frame. The attaching section is, for example, a boss having a through-hole. In the case where the second region (having the H-shaped cross-section) is located in the vicinity of the attaching section, pads in the vicinity of each attaching section can be made smaller. Therefore, the coolability can be improved in the vicinity of the attaching section, and the generation of casting defects can be suppressed with more certainty. Owing to the second region being located in the vicinity of the attaching section, the bending stress acting on the connecting wall when the rider sits on the seat can be smaller. Therefore, the connecting wall does not need to have an increased thickness in order to be against an excessively large bending stress. This also suppresses the generation of casting defects. When attaching the seat frame to the main frame, a torsional stress may act on the attaching section and the vicinity thereof (this occurs when, for example, attaching the seat frame by tightening). Where the torsional rigidity is too high, the stress generated at the time of attaching may become large and destroy the seat frame. However, in the case where the second region is located in the vicinity of the attaching section, the torsional rigidity in the attaching section and the vicinity thereof can be smaller, which can reduce the stress at the time of attaching.

The attaching section includes a boss having a through-hole. In order to improve the strength of the seat frame, it is preferable that the width of each frame member (distance between the first side wall and the second side wall) is wide. However, the width of the frame member cannot be infinitely wide because of the relationship with the distance between the legs of the rider when the rider sits on the seat and with the capacitance of the elements of the seat frame (the tank, etc.). In order to provide a sufficiently high strength under such constraints, it is preferable that the second region extends to a position at least 50 mm away rearward from the central axis of the through-hole. In the case where the central axis of the through-hole is on an extension line of the connecting wall, the effect of reducing the bending stress acting on the connecting wall (generated around the central axis) is high and the effect of reducing the torsional rigidity in the attaching section and the vicinity thereof is also high.

In the second region, it is preferable that a height from the top surface of the connecting wall to the top end of the first side wall and a height from the top surface of the connecting wall to the top end of the second side wall increase toward the attaching section. Namely, it is preferable that the depth of the groove made by the connecting wall, the first side wall and the second side wall continuously increases toward the attaching section. Owing to such a structure, the stress can be slowly changed between the regions having different cross-sectional structures and thus the generation of a stress-concentrated area can be prevented.

In order to further improve the bending strength in a height direction (up-down direction), it is preferable that at an end of the second region on the attaching section side, the height from the top surface of the connecting wall to the top end of the first side wall and the height from the top surface of the connecting wall to the top end of the second side wall are each 6 mm or larger.

It is preferable that the connecting wall has a hole in the vicinity of the attaching section. Owing to the hole formed in the vicinity of the attaching section, the cooling rate of the portion in the vicinity of the hole at the time of casting is increased, and so the generation of casting defects in the attaching portion and the vicinity thereof can be suppressed with more certainty. Another effect that the seat frame can be more lightweight is also provided.

It is preferable that the hole is a through-hole. In the case where the hole is a through-hole, the effect of suppressing the generation of casting defects is high. In the case where the hole is a through-hole, the hole can act as a water hole and so the corrosion resistance is improved. Furthermore, the generation of an air pocket is prevented at the time of undercoating or electrodeposition coating. This provides an effect of improving the throwing power (coloring uniformity) of the coating.

In order to guarantee that the elements of the seat frame (the tank, etc.) have a sufficient capacitance while the distance between the legs of the rider when the rider sits on the seat is set appropriately (so as not to be too wide), it is preferable that distance between the first side wall and the second side wall in the second region is 12 mm or shorter.

In order to obtain a higher strength with certainty, it is preferable that thickness of each of the first side wall and the second side wall is 2 mm or larger.

In order to guarantee that the elements accommodated in the seat frame (the tank, etc.) have a sufficient capacitance, the frame members may each have a curved portion curved with respect to the vehicle length direction. In this case, the width of the connecting wall may become narrow at the curved portion. By arranging the curved portion to be in the second region (having the H-shaped cross-section), the narrowed portion of the connection wall is easily guaranteed to have a sufficient strength.

As described above, the present invention can suppress the generation of a casting defect which would otherwise occur to a seat frame when being cast using a magnesium alloy or an aluminum alloy. Therefore, the present invention can realize a lightweight seat frame at low cost. A saddle-riding type transporter including the lightweight seat frame according to the present invention provide superb running performance and fuel consumption.

According to the present invention, the generation of a casting defect can be suppressed which would otherwise occur to frame members of a seat frame when being formed of a magnesium alloy or an aluminum alloy by casting.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. **1** is a side view schematically showing a motorcycle including a seat frame in a preferable embodiment according to the present invention.
FIG. **2** is an isometric view schematically showing a main frame included in the motorcycle shown in FIG. **1****.**
FIG. **3** is an exploded isometric view schematically showing a structure of the seat frame and a portion of the motorcycle shown in FIG. **1** above the seat frame.
FIGS. **4A** and **4B** schematically show the seat frame in a preferable embodiment according to the present invention; FIG. **4A** is a cross-sectional view taken along **4A-4A'** in FIG. **3****,** and FIG. **4B** is a cross-sectional view taken along **4B-4B'** in FIG. **3****.**
FIG. **5** is an isometric view of an attaching section and the vicinity thereof of the seat frame in a preferable embodiment according to the present invention.
FIGS. **6A** and **6B** are each a side view showing the attaching section and the vicinity thereof of the seat frame in a preferable embodiment according to the present invention; FIG. **6A** shows a case where a second region (region having an H-shaped cross-section) is located in the vicinity of the attaching section, and FIG. **6B** shows a case where a first region (region having a U-shaped cross-section) is located in the vicinity of the attaching section.
FIG. **7** is a side view schematically showing the seat frame and a main frame connected to the seat frame in a preferable embodiment according to the present invention.
FIGS. **8A** and **8B** are each a side view showing the attaching section and the vicinity thereof of the seat frame in a preferable embodiment according to the present invention; FIG. **8A** shows a case where the first region (region having a U-shaped cross-section) is located in the vicinity of the attaching section, and FIG. **8B** shows a case where the second region (region having an H-shaped cross-section) is located in the vicinity of the attaching section.
FIG. **9** is a top view schematically showing the seat frame and the main frame connected to the seat frame in a preferable embodiment according to the present invention.
FIGS. **10A** and **10B** are each a cross-sectional view taken along line **10A-10A'** in FIG. **9****;** FIG. **10A** shows a case where the first region (region having a U-shaped cross-section) is located in the vicinity of the attaching section, and FIG. **10B** shows a case where the second region (region having an H-shaped cross-section) is located in the vicinity of the attaching section.
FIGS. **11A, 11B** and **11C** each show the attaching section and the vicinity thereof of the seat frame in a preferable embodiment according to the present invention; FIG. **11A** is a side view of a left frame member seen from the inside of the vehicle width direction, FIG. **11B** is a side view of the left frame member seen from the outside of a vehicle width direction, and FIG. **11C** is a plan view of the left frame member seen from above.
FIG. **12** is an isometric view of the attaching section and the vicinity thereof of the seat frame in a preferable embodiment according to the present invention.
FIG. **13** is a cross-sectional view showing the seat frame in a preferable embodiment according to the present invention.
FIG. **14** is a plan view showing how an inner side wall and an outer side wall of the seat frame each act as a positioning section usable for attaching a seat in a preferable embodiment according to the present invention.
FIG. **15** is an isometric view of the attaching section and the vicinity thereof of the seat frame in a preferable embodiment according to the present invention.
FIG. **16** is a plan view showing an example of a hole provided in the vicinity of the attaching section of the seat frame in a preferable embodiment according to the present invention.
FIGS. **17A** and **17B** are each a plan view showing an example of a hole provided in the vicinity of the attaching section of the seat frame in a preferable embodiment according to the present invention.
FIG. **18** is a plan view showing an example of a hole provided in the vicinity of the attaching section of the seat frame in a preferable embodiment according to the present invention.

### DETAILED DESCRIPTION OF PREFERRED EMBODIMENTS

Hereinafter, embodiments of the present invention will be described with reference to the accompanying drawings. In the following, a seat frame for a motorcycle will be described as an example, but the present invention is not limited to this and is widely applicable to a seat frame for a saddle-riding type transporter. For example, the present invention is also usable for a snow mobile (SMB), an all terrain vehicle (ATV), a water vehicle or the like.

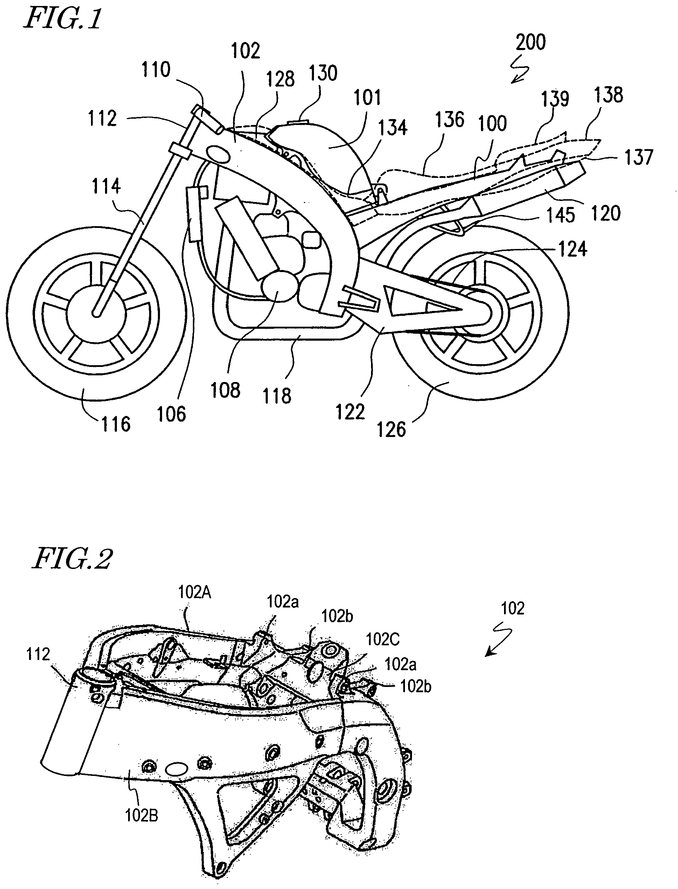

FIG. 1 shows a motorcycle **200** including a seat frame **100** in this embodiment. The motorcycle **200** includes a fuel tank **101,** a main frame **102,** the seat frame **100,** an internal combustion engine **108,** a front wheel **116,** and a rear wheel **126.** The motorcycle **200** is a saddle-riding type transporter (motorized vehicle) on which a rider may get astraddle.

FIG. **2** is an isometric view showing the main frame **102** in enlargement. The main frame **102** includes a pair of frames **102A** and **102B** connected to a head pipe **112** which is located in a front portion of the vehicle. The frames **102A** and **102B** are curved in a central portion of the motorcycle **200** to extend downward. The frames **102A** and **102B** are connected to each other at ends thereof. The curved portions of the frames **102A** and **102B** are connected to each other by a connection portion **102C.** The connection portion **102C** includes a pair of first engageable sections **102a** and a pair of second engageable sections **102b** for connecting the connection portion **102C** to the seat frame **100.** In this embodiment, the first engageable sections **102a** and the second engageable sections **102b** are each a stay having a hole through which a bolt may be inserted. The main frame **102** and the seat frame **100** form a body of the motorcycle **200.**

As shown in FIG. **1****,** a front fork **114** is rotatably attached to the head pipe **112.** At one end of the front fork **114,** the front wheel **116** is rotatably supported. To the other end of the front fork **114,** a steering handle **110** is fixed.

The fuel tank **101** is attached in the vicinity of a central portion of the motorcycle **200** while being astraddle over the main frame **102** and the seat frame **100.** Forward with respect to the fuel tank **101,** an air cleaner **128** is provided. The fuel tank **101** is provided with a cap **130** for covering a fuel injection opening (not shown).

The internal combustion engine **108** is supported by the main frame **102** to be located below the fuel tank **101.** Forward with respect to the internal combustion engine **108,** a radiator **106** is provided. To an exhaust port of the internal combustion engine **108,** an exhaust pipe **118** is connected. Although not shown in detail in FIG. 1, an end of the exhaust pipe **118** is separated into a plurality of portions, which respectively guide exhaust gas from a plurality of cylinders of the internal combustion engine **108.** The exhaust pipe **118** pass below the internal combustion engine **108** to be guided rearward along the seat frame **100.** The exhaust pipe **118** is separated into two at a position in the vicinity of the seat frame **100,** and each of the two separated pipes is connected to a muffler **120.** The exhaust pipe **118** and the muffler **120** are supported by the seat frame **100.** The seat frame **100** is provided with a pair of footrests **145.**

The main frame **102** is connected to a swing arm **122,** and the rear wheel **126** is rotatably supported by the swing arm **122.** A rotation driving force of the internal combustion engine **108** is transmitted to the rear wheel **126** via a chain **124.**

In addition to the above described elements, the motorcycle **200** includes an external cover **134** for covering a bottom portion of the fuel tank **101,** a rider seat **136,** a rear cover **137,** a side cover **138,** and a passenger seat **139.** These elements are shown with dashed lines in FIG. **1** in order to show the seat frame **100** clearly.

As described above, the main frame **102** and the seat frame **100** form the body of the motorcycle **200,** and need to have a high strength in order to support the various structural elements of the motorcycle **200.** Especially, the seat frame **100** supports the rider seat **136,** the passenger seat **139** and the footrests **145,** and so is to receive the body weights of the rider and the passenger.

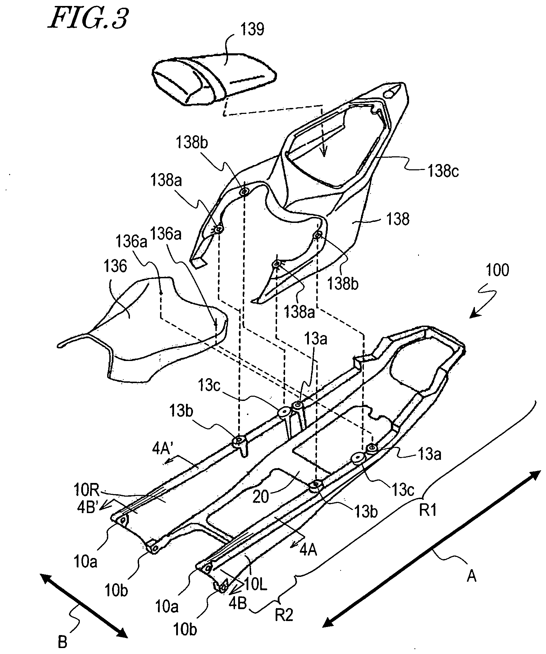

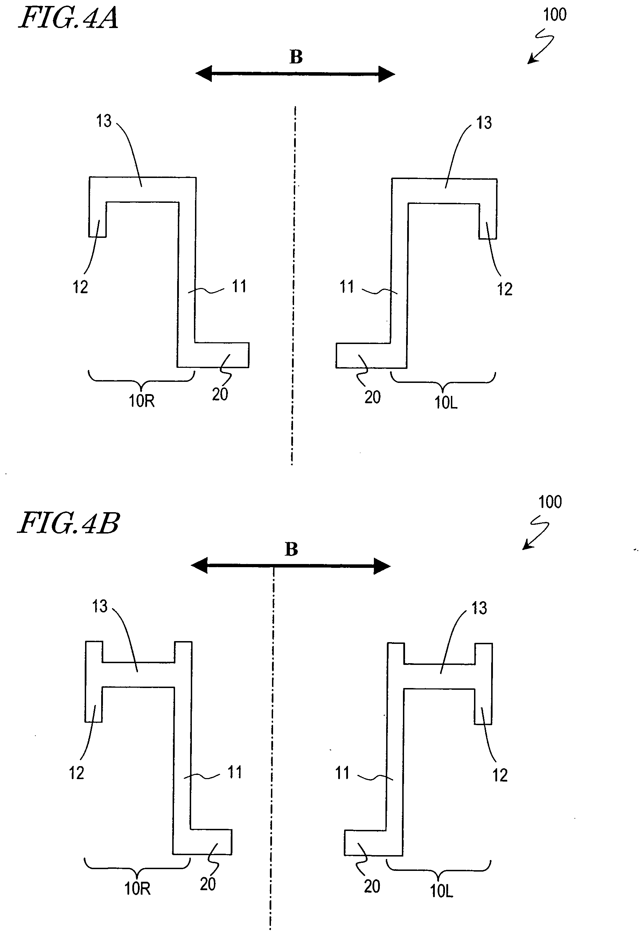

Hereinafter, with reference to FIGS. **3****,** **4A** and **4B****,** a structure of the seat frame (also referred to as a "sub frame" or "rear frame") **100** in this embodiment will be described. FIG. **3** is an exploded isometric view showing the seat frame **100** and a portion of the motorcycle **200** above the seat frame **100.** FIG. **3** shows the seat frame **100,** the rider seat **136,** the side cover **138** and the passenger seat **139.** FIGS. **4A** and **4B** are cross-sectional views respectively taken along lines **4A-4A'** and **4B-4B'** in FIG. **3****.**

As shown in FIG. **3****,** the seat frame **100** includes a pair of frame members (seat rails) **10R** and **10L** formed of a magnesium alloy or an aluminum alloy by casting and a connecting member **20** for connecting the pair of frame members **10R** and **10L** to each other. The frame members **10R** and **10L** extend in a vehicle length direction (front-rear direction) **A.** By contrast, the connecting member **20** extends in a vehicle width direction (left-right direction) **B.**

In this embodiment, the frame members **10R** and **10L** and the connecting member **20** are integrally formed by casting (e.g., diecasting). The connecting member **20** may be formed separately from the frame members **10R** and **10L** and mechanically connected with the frame members **10R** and **10L.** In the case of being formed separately from the frame members **10R** and **10L,** the connecting member **20** does not absolutely need to be formed of the same material as that of the frame members **10R** and **10L** (a magnesium alloy or an aluminum alloy). Nonetheless, it is preferable that the connecting member **20** is formed of the same material as that of the frame members **10R** and **10L** in order to have a sufficient level of corrosion resistance with certainty.

As shown in FIGS. **4A** and **4B****,** the frame members **10R** and **10L** each include a first side wall **11,** a second side wall **12** located outer with respect to the first side wall **11** in the vehicle width direction **B,** and a connecting wall (top wall) **13** for connecting the first side wall **11** and the second side wall **12** to each other. Hereinafter, the first side wall **11,** which is located relatively inner, will be referred to as an "inner side wall"; and the second side wall **12,** which is located relatively outer, will be referred to as an "outer side wall". A bottom end of the inner side wall **11** of one of the frame members, i.e., the frame member **10R,** and a bottom end of the inner side wall **11** of the other frame member **10L** are connected to each other by the connecting member **20.**

As shown in FIG. **3****,** the connecting walls **13** each include a first engageable section **13a** for attaching the rider seat **136** to the seat frame **100.** The rider seat **136** is shaped like a saddle and includes a pair of engageable sections **136a.** As shown in FIG. **3** with the dashed lines, the engageable sections **136a** of the rider seat **136** are engaged with the first engageable sections **13a** of the frame members **10R** and **10L,** and thus the seat frame **100** and the rider seat **136** are connected to each other.

The first engageable sections **13a** of the frame members **10R** and **10L,** and the engageable sections **136a** of the rider seat **136,** may have any structure as long as being engageable with each other directly (or via another element) to fix the rider seat **136** to the seat frame **100.** In this embodiment, these engageable sections each have a hole. A caulking nut with a female screw is inserted into each hole and is tightened with a bolt, and thus the engageable sections are connected to each other.

The connecting walls **13** each include a second engageable section **13b** and a third engageable section **13c** for attaching the side cover **138** to the seat frame **100.** The side cover **138** includes a pair of first engageable sections **138a,** a pair of second engageable sections **138b,** and a support frame **138c** for fixing the passenger seat **139.** As shown in FIG. **3** with the dashed lines, the first engageable sections **138a** of the side cover **138** are engaged with the second engageable sections **13b** of the frame members **10R** and **10L,** and the second engageable sections **138b** of the side cover **138** are engaged with the third engageable sections **13c** of the frame members **10R** and **10L.** Thus, the seat frame **100** and the side cover **138** are connected to each other. The passenger seat **139** is fixed to the seat frame **100** via the support frame **138c** of the side cover **138.**

The second engageable sections **13b** and the third engageable sections **13c** of the frame members **10R** and **10L,** and the first engageable sections **138a** and the second engageable sections **138b** of the side cover **138,** may have any structure as long as being engageable with each other directly (or via another element) to fix the side cover **138** to the seat frame **100.** In this embodiment, these engageable sections each have a hole, and are respectively connected to each other by a bolt and a nut.

As described above, the connecting walls **13** each include the first engageable section **13a,** the second engageable section **13b,** and the third engageable section **13c** for fixing the seats (the rider seat **136** and the passenger seat **139).** Hereinafter, the first engageable section **13a,** the second engageable section **13b,** and the third engageable section **13c** of the connecting walls **13** may be collectively referred to as "seat fixing sections".

As shown in FIG. **3****,** a front end portion of each of the frame members **10R** and **10L** (an end closer to the internal combustion engine **108)** includes a fourth engageable section **10a** and a fifth engageable section **10b** as an attaching section for attaching the seat frame **100** to the main frame **102.** In this embodiment, the fourth engageable section **10a** and the fifth engageable section **10b** are each a boss having a hole (through-hole) through which a bolt may be inserted. The fourth engageable sections **10a** and the fifth engageable sections **10b** of the frame members **10R** and **10L** are engaged with the first engageable sections **102a** and the second engageable sections **102b** (see FIG. 2) of the main frame **102,** and thus the seat frame **100** and the main frame **102** are connected to each other. Hereinafter, each of the fourth engageable sections **10a** and the fifth engageable sections **10b** of the frame members **10R** and **10L** may also be referred to as an "attaching section" or "boss").

The seat frame **100** has, for example, the following external size. A width of the connecting member **20** on the internal combustion engine **108** side (i.e., distance between the pair of frame members **10R** and **10L)** is about 200 mm to 300 mm, and a height of each of the frame members **10R** and **10L** on the internal combustion engine **108** side is about 80 mm to 160 mm. A length of the seat frame **100** in the vehicle length direction **A** is about 600 mm to 800 mm.

The frame members **10R** and **10L** each have a first region **R1** and a second region **R2** which are different from each other in the cross-sectional structure (structure in a cross-section which is perpendicular to the vehicle length direction **A** and parallel to the vehicle width direction **B**)**.** In this embodiment, the second regions **R2** are located in the vicinity of the attaching sections **10a** and **10b** provided in the front end portions of the frame members **10R** and **10L,** and the first regions **R1** are located rearward with respect to the second regions **R2.** Namely, the second regions **R2** are located between the attaching sections **10a** and **10b** and the first regions **R1.**

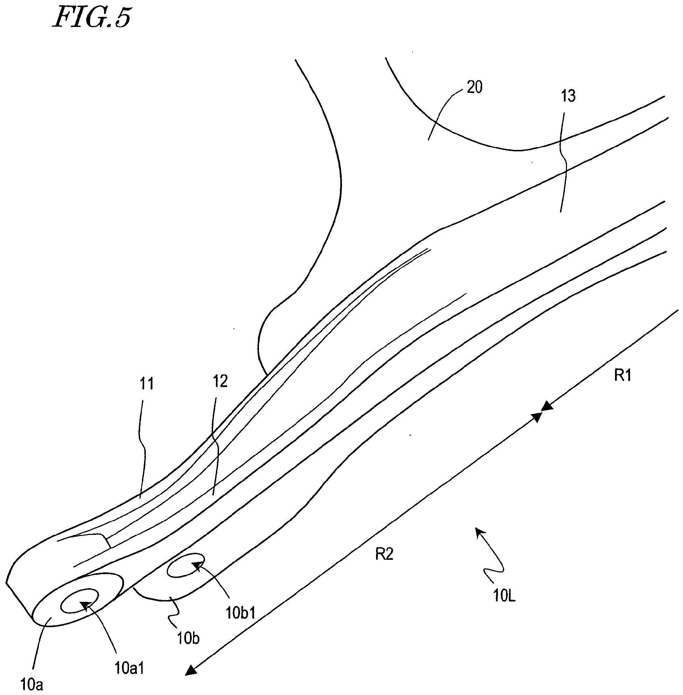

Hereinafter, with reference also to FIG. **5****,** a cross-sectional structure of the frame members **10R** and **10L** in each of the first regions **R1** and the second regions **R2** will be described. FIG. **5** is an isometric view showing the attaching sections **10a** and **10b** and the vicinity thereof of the frame member **10L** in enlargement. In FIG. **5****,** the attaching sections **10a** and **10b** are shown as bosses having through-holes **10a1** and **10b1** as an example.

As shown in FIGS. **4A** and **5****,** in the first region **R1,** a top end of the inner side wall **11** and a top end of the outer side wall **12** are connected to each other by the connecting wall **13.** Therefore, in the first region **R1,** a top portion of each of the frame members **10R** and **10L** has a U-shaped cross-section.

By contrast, as shown in FIGS. **4B** and **5****,** in the second region **R2,** a portion below the top end of the inner side wall **11** and a portion below the top end of the outer side wall **12** are connected to each other by the connecting wall **13.** Therefore, in the second region **R2,** a top portion of each of the frame members **10R** and **10L** has an H-shaped cross-section.

As described above, in this embodiment, the frame members **10R** and **10L** of the seat frame **100** have two regions **R1** and **R2** having different cross-sectional structures. As compared with a U-shaped cross-section, an H-shaped cross-section generates a smaller stress when being twisted and so has a higher strength. Therefore, as compared with conventional seat frame in which the frame members entirely have a U-shaped cross-section, the seat frame **100** having the second region **R2** in a part of each of the frame members **10R** and **10L** has a higher strength. For this reason, the connecting walls **13** do not need to be thick, and so the thickness difference between the connecting walls **13** and the side walls (the inner side walls **11** and the outer side wall **12**) can be smaller. This can decrease the difference in the cooling rate at the time of casting between the connecting walls **13** and the side walls, which can suppress the generation of shrinkage cracks or shrinkage porosities.

As can be seen from FIGS. **4B** and **5****,** in the H-shaped cross-section, the top end of the inner side wall **11** and the top end of the outer side wall **12** protrude more upward than a top surface of the connecting wall **13.** Therefore, in the case where the frame members **10R** and **10L** entirely have the H-shaped cross-section, it is difficult to attach the seats to the frame members **10R** and **10L.** However, in the seat frame **100** in this embodiment, as shown in FIG. **3****,** the seat fixing sections **13a, 13b** and **13c** for fixing the seats are located in the first regions (having the U-shaped cross-section) **R1.** Therefore, the seats can be fixed easily. Namely, by causing each of the frame members **10R** and **10L** to have the two regions **R1** and **R2** having different cross-sectional structures as in this embodiment, the generation of casting defects can be suppressed without obstructing the fixation of the seats.

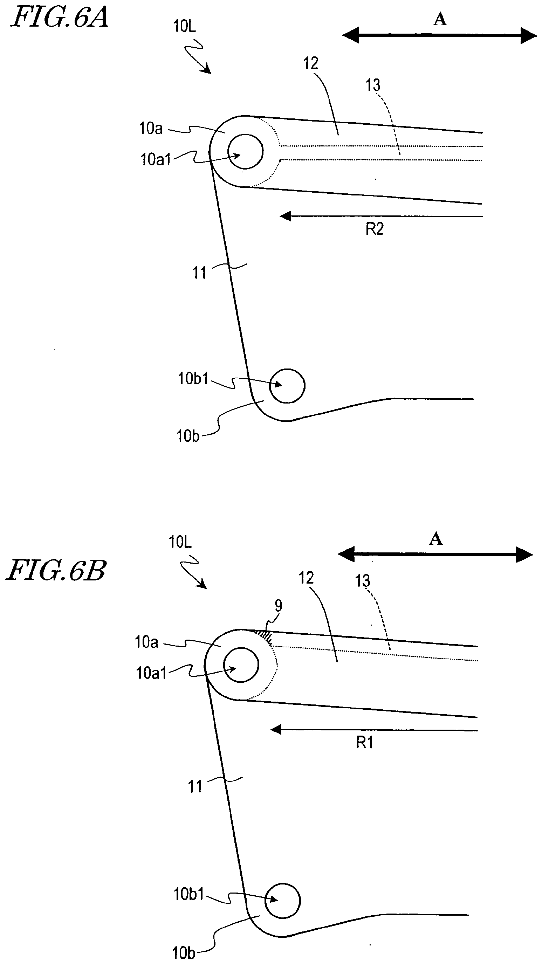

In this embodiment, the second region **R2** is located in the vicinity of the attaching sections **10a** and **10b.** This can suppress the generation of casting defects in the vicinity of the attaching sections **10a** and **10b** with more certainty. The reason for this will be described with reference to FIGS. **6A** and **6B****.**

FIGS. **6A** and **6B** are side views showing the attaching sections **10a** and **10b** and the vicinity thereof of the frame member **10L.** FIG. **6A** shows a case where the second region **R2** is located in the vicinity of the attaching sections **10a** and **10b.** FIG. **6B** shows a case where the first region **R1** is located in the vicinity of the attaching sections **10a** and **10b.**

As shown in FIGS. **6A** and **6B****,** the attaching sections **10a** and **10b** are respectively cylindrical bosses having through-holes **10a1** and **10b1.** One of the bosses, i.e., the boss **10a**, is provided at a top end of the front end portion of the frame member **10L,** and the other boss **10b** is provided at a bottom end of the front end portion of the frame member **10L.**

In the example shown in FIG. **6A****,** a central portion of the upper boss **10a** and the connecting wall **13** are connected to each other. By contrast, in the example shown in FIG. **6B****,** a top portion of the upper boss **10a** and the connecting wall **13** are connected to each other. As understood from the comparison of FIGS. **6A** and **6B****,** in the example shown in FIG. **6B****,** pads **9** is generated in the vicinity of the boss **10a,** and the thickness is larger in this portion than in the remaining portion of the vicinity of the boss **10a.** As can be seen from this, in the case where the first region **R1** is located in the vicinity of the attaching sections **10a** and **10b,** pads is generated depending on the structure or location of the attaching sections **10a** and **10b,** and the cooling rate at the time of casting is decreased in such a portion. By contrast, in the case where the second region **R2** is located in the vicinity of the attaching sections **10a** and **10b,** such pads can be made smaller. Therefore, the coolability can be improved in the vicinity of the attaching section (in the example of FIG. **6A****,** the upper boss **10a**) and the generation of casting defects can be suppressed with more certainty.

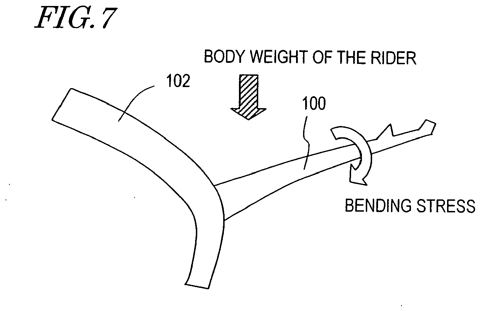

In the case where the second region **R2** is located in the vicinity of the attaching sections **10a** and **10b,** the following effects are also provided. When the rider sits on the seat, as schematically shown in FIG. **7****,** a bending stress acts on the seat frame **100** because of the body weight of the rider.

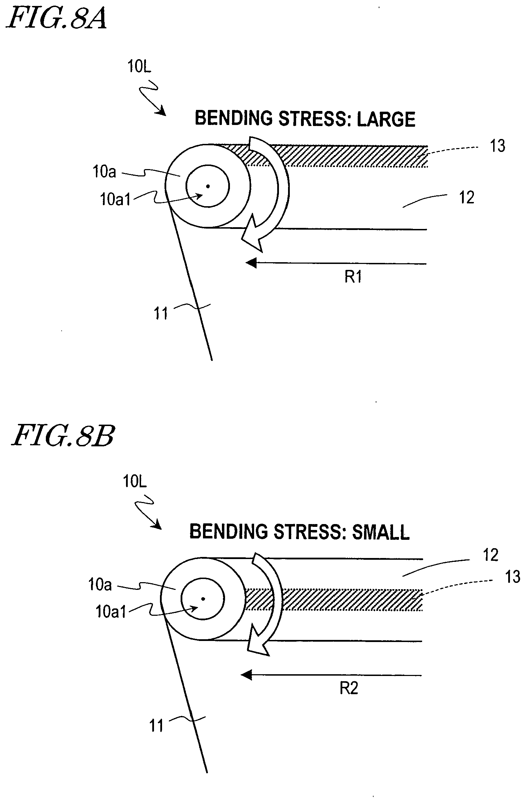

The following occurs in the attaching section **10a** and the vicinity thereof. FIG. **8A** shows the case where the first region **R1** is located in the vicinity of the attaching section **10a.** FIG. **8B** shows the case where the second region **R2** is located in the vicinity of the attaching section **10a.** In the case of FIG. **8A****,** as compared with the case of FIG. **8B****,** the connecting wall **13** is farther from the central axis of the through-hole **10a1,** and so the bending stress acting on the connecting wall **13** is larger. Where the connecting wall **13** is increased in the thickness in order to be against such a larger bending stress, the cooling rate of the connecting wall **13** is decreased, which may generate shrinkage cracks or shrinkage porosities. By contrast, in the case of FIG. **8B****,** as compared with the case of FIG. **8A****,** the connecting wall **13** is closer to the central axis of the through-hole **10a1,** and so the bending stress acting on the connecting wall **13** can be smaller. Therefore, the connecting wall **13** does not need to be increased in the thickness in order to be against such an excessively large bending stress, and so the generation of casting defects is suppressed.

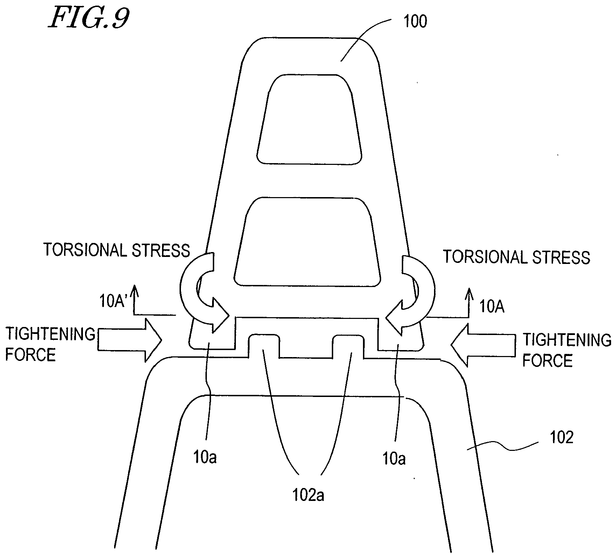

For attaching the seat frame **100** to the main frame **102,** a torsional stress may act on the attaching section **10a** and the vicinity thereof. For example, as shown in FIG. **9****,** a prescribed clearance is provided between the attaching sections (the fourth engageable sections) **10a** of the seat frame **100** and the first engageable sections **102a** of the main frame **102** for the purpose of facilitating the positional alignment of the engageable sections. When the seat frame **100** and the main frame **102** are tightened (e.g., by a bolt) in such a state, a torsional stress acts on the attaching sections **10a** and the vicinity thereof of the seat frame **100** by the tightening force.

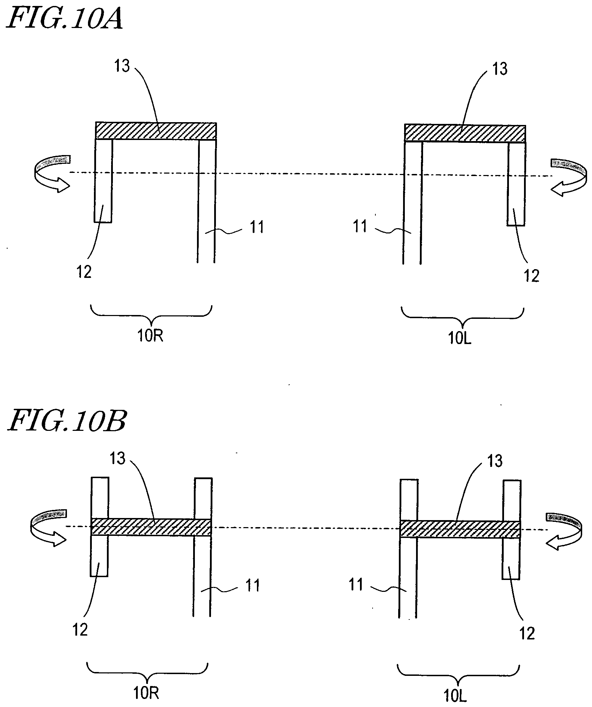

FIGS. **10A** and **10B** each show a cross-section taken along line **10A-10A'** in FIG. **9****.** FIG. **10A** shows the case where the top portion of each of the frame members **10R** and **10L** has the U-shaped cross-section in the vicinity of the attaching section **10a** (i.e., the case where the first region **R1** is located in the vicinity of the attaching section **10a**). FIG. **10B** shows the case where the top portion of each of the frame members **10R** and **10L** has the H-shaped cross-section in the vicinity of the attaching section **10a** (i.e., the case where the second region **R2** is located in the vicinity of the attaching section **10a**).

In the case of FIG. **10A****,** as compared with the case of FIG. **10B****,** each connecting wall **13** is farther from the central axis of the through-hole **10a1,** and so the torsional rigidity of the frame members **10R** and **10L** in the attaching sections **10a** is higher. Where the torsional rigidity is too high, the stress generated at the time of attaching may become large and destroy the seat frame **100.** The torsional rigidity can be reduced and the destruction can be prevented by reducing the thickness of the connecting wall **13.** However, in such a case, the connecting wall **13** cannot be against the large bending stress described above with reference to FIG. **8A****.** By contrast, in the case of FIG. **10B****,** as compared with the case of FIG. **10A****,** the connecting wall **13** is closer to the central axis of the through-hole **10a1,** and so the torsional rigidity of the frame members **10R** and **10L** in the attaching sections **10a** can be smaller. Therefore, the stress at the time of attaching can be reduced.

In FIGS. **8B** and **10B****,** the connecting wall **13** and the through-hole **10a1** are located at substantially the same level of height, namely, the central axis of the through-hole **10a1** is on an extension line of the connecting wall **13.** The relative positional relationship between the connecting wall **13** and the through-hole **10a1** is not limited to this. In the case where the central axis of the through-hole **10a1** is on an extension line of the connecting wall **13,** the effect of reducing the bending stress acting on the connecting wall **13** (the bending stress generated around the central axis) is high and the effect of reducing the torsional rigidity in the attaching section **10a** and the vicinity thereof is also high.

In order to improve the strength of the seat frame **100,** it is preferable that the width of each of the frame members **10R** and **10L** (width in the vehicle width direction **B**) is wide. However, the width of each of the frame members **10R** and **10L** cannot be infinitely wide because of the relationship with the distance between the legs of the rider when the rider sits on the seat and with the capacitance of the elements of the seat frame **100** (the fuel tank **101,** etc.). In order to provide a sufficiently high strength under such constraints, it is preferable that the second region **R2** extends to a position at least 50 mm away rearward from the central axis of the through-hole **10a1** of the boss **10a** as an attaching section. Namely, it is preferable that the distance from the central axis of the through-hole **10a1** to an end of the second region **R2** (end opposite to the attaching section **10a**) is 50 mm or longer.

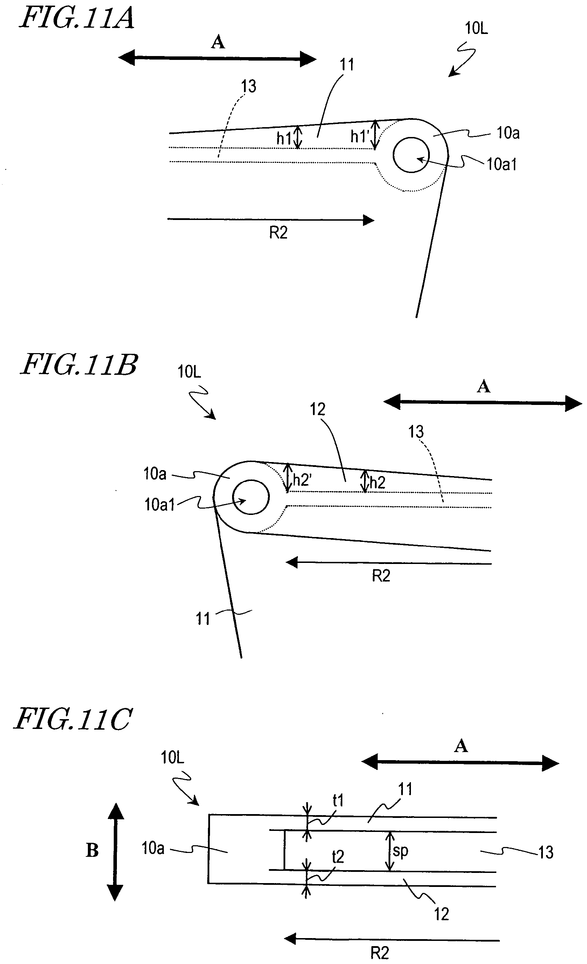

Now, with reference also to FIGS. **11A, 11B** and **11C****,** a more preferable structure of the inner side wall **11** and the outer side wall **12** in the second region **R2** will be described. FIGS. **11A, 11B** and **11C** each show the attaching section **10a** and the vicinity thereof of the frame member **10L.** FIG. **11A** is a side view of the frame member **10L** seen from the inside in the vehicle width direction **B,** whereas FIG. **11B** is a side view of the frame member **10L** seen from the outside in the vehicle width direction **B.** FIG. **11C** is a plan view of the frame member **10L** seen from above.

In the second region **R2,** it is preferable that height **h1** from the top surface of the connecting wall **13** to the top end of the inner side wall **11** and height **h2** from the top surface of the connecting wall **13** to the top end of the outer side wall **12** increase toward the attaching section **10a** as shown in FIGS. **11A** and **11B****.** Namely, it is preferable that the depth of the groove made by the connecting wall **13,** the inner side wall **11** and the outer side wall **12** continuously increases toward the attaching section **10a.** Owing to such a structure, the stress can be slowly changed in the second region **R2** and thus the generation of a stress-concentrated area can be prevented.

In order to further improve the bending strength in a height direction (up-down direction), it is preferable that heights **h1** and **h2** at an end of the second region **R2** on the attaching section **10a** side (shown as **h1'** and **h2'** in FIGS. **11A** and **11B****)** are each 6 mm or larger.

In order to guarantee that the elements of the seat frame **100** (the fuel tank **101,** etc.) have a sufficient capacitance while the distance between the legs of the rider when the rider sits on the seat is set appropriately (so as not to be too wide), it is preferable that distance **sp** (see FIG. **11C**) between the inner side wall **11** and the outer side wall **12** in the second region **R2** is 12 mm or shorter.

In order to obtain a higher strength with certainty, it is preferable that thickness **t1** of the inner side wall **11** and thickness **t2** of the outer side wall **12** (see FIG. **11C**) are each 2 mm or larger.

In order to guarantee the elements accommodated in the seat frame **100** (e.g., the fuel tank **101,** etc.) have a sufficient capacitance, the frame members **10R** and **10L** may each have a curved portion curved with respect to the vehicle length direction **A** (i.e., the portion extending in the vehicle length direction **A** and protruding in the vehicle width direction **B**). FIG. **5** shows the frame member **10L** having such a curved portion. In the case where the frame members **10R** and **10L** each have a curved portion, the width of the connecting wall **13** may become narrow at the curved portion as shown in FIG. **5****.** By arranging the curved portions to be in the second region **R2** (having the H-shaped cross-section), even the narrowed portion of the connection wall **13** is easily guaranteed to have a sufficient strength.

As described above, in this embodiment, since the frame members **10R** and **10L** each have two regions having different cross-sectional structures (the first region **R1** and the second region **R2**), the seat frame **100** can suppress the generation of casting defects without obstructing the fixation of the seats.

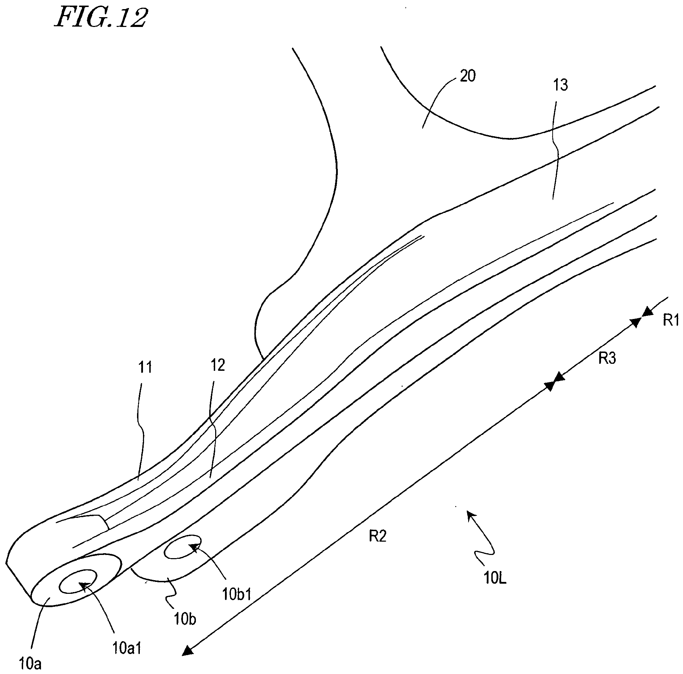

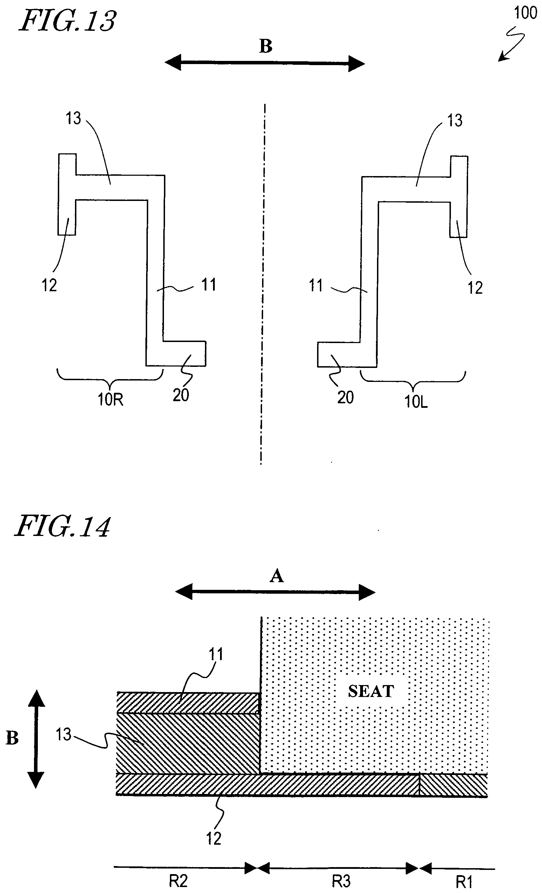

As shown in FIGS. **12** and **13****,** each of the frame members **10R** and **10L** may further include a third region **R3,** which is different in the cross-sectional structure from the first region **R1** and the second region **R2.** FIG. **12** is an isometric view of the frame member **10L** having the third region **R3.** FIG. **13** is a cross-sectional view of the frame members **10R** and **10L** having the third region **R3.** As shown in FIGS. **12** and **13****,** in the third region **R3,** the top end of the inner side wall **11** and a portion below the top end of the outer side wall **12** are connected to each other by the connecting wall **13.** Accordingly, in the third region **R3,** the top portion of the frame member **10L** has an h-shaped cross-section.

In the case where the third region **R3** is located between the first region **R1** and the second region **R2** as shown in FIG. **12****,** the inner side wall **11** and the outer side wall **12** can act as a positioning section usable for attaching the seat. Specifically, as shown in FIG. **14****,** in the third region **R3,** the inner side wall **11** can act as a positioning section for the vehicle length direction **A** and the outer side wall **12** can act as a positioning section for the vehicle width direction **B.** This further facilitates the attachment of the seat.

In the second region **R2** and the third region **R3,** it is preferable that height **h1** from the top surface of the connecting wall **13** to the top end of the inner side wall **11** and height **h2** from the top surface of the connecting wall **13** to the top end of the outer side wall **12** increase toward the attaching section **10a** as shown in FIGS. **11A** and **11B****.** Owing to such a structure, the stress can be slowly changed between the second region **R2** and the third region **R3** having different cross-sectional structures and thus the generation of a stress-concentrated area can be prevented.

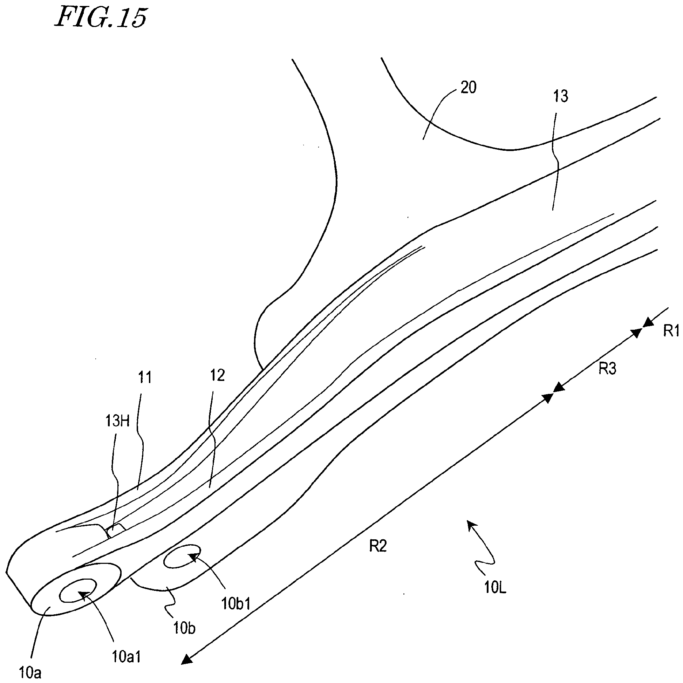

It is preferable that the connecting walls **13** of the frame members **10R** and **10L** each have a hole in the vicinity of the attaching section **10a.** FIG. **15** shows the frame member **10L** having a hole **13H** in the vicinity of the attaching section **10a.** Herein, the hole **13H** is a through-hole. Owing to the hole **13H** formed in the vicinity of the attaching section **10a,** the cooling rate of the portion in the vicinity of the hole **13H** is increased. This can suppress the generation of casting defects in this portion with more certainty. Another effect that the seat frame **100** can be more lightweight is also provided.

The hole **13H** may be a non-through-hole (hole with a bottom). In the case where the hole **13H** is a non-through-hole, the depth of the hole **13H** may be entirely constant or may increase toward the attaching section **10a.**

In the case where the hole **13H** is a through-hole as in this embodiment, the effect of suppressing the generation of casting defects is high. In the case where the hole **13H** is a through-hole, the hole **13H** can act as a water hole and so the corrosion resistance is improved. Furthermore, the generation of an air pocket is prevented at the time of undercoating or electrodeposition coating. This provides an effect of improving the throwing power (coloring uniformity) of the coating.

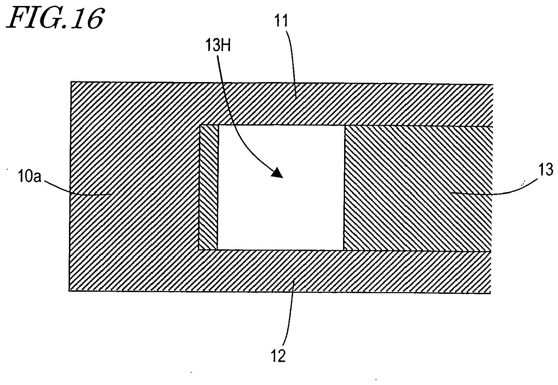

FIG. **15** shows the hole **13H** having an outer edge contacting the attaching section **10a** as an example. The location of the hole **13H** is not limited to this. For example, as shown in FIG. **16****,** the outer edge of the hole **13H** may be slightly distanced from the attaching section **10a.** In order to enhance the effect of suppressing the generation of casting defects, it is preferable that at least a part of the hole **13H** is located within 3 mm from the attaching section **10a.**

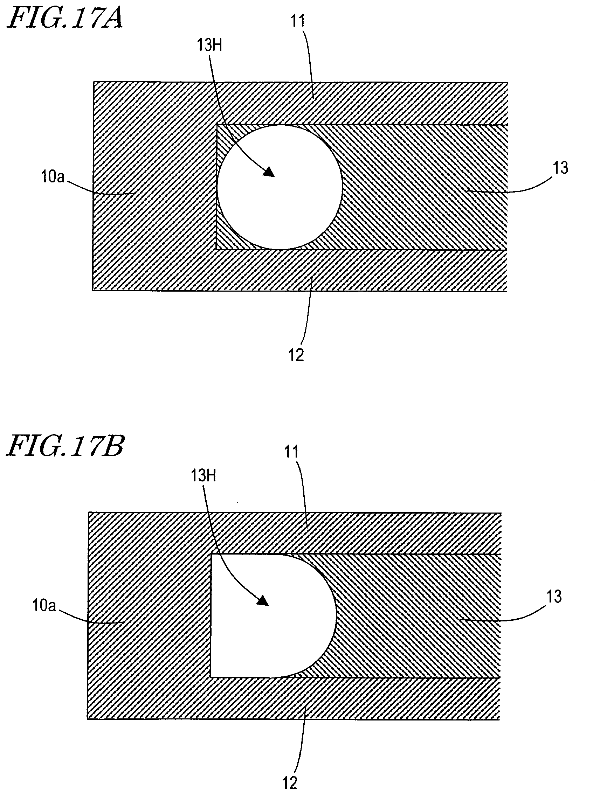

The hole **13H** is not limited to having a quadrangular shape (square or rectangular) as shown in FIG. **15** or **16****.** The shape of the hole **13H** may be a circle as shown in FIG. **17A** or may be a combination of a quadrangular shape and a part of a circle (herein, semicircle) as shown in FIG. **17B****.**

There is no specific limitation on the size of the hole **13H.** It is preferable that the hole **13H** have an area of 6 mm² or larger and 160 mm² or smaller. Where the area of the hole **13H** is smaller than 6 mm², the effect of suppressing the generation of casting defects may not be sufficiently provided. Where the area of the hole **13H** is larger than 160 mm², it may be difficult to guarantee a sufficient strength of the connecting wall **13.** Herein, the "area" of the hole **13H** is a cross-sectional area of the hole **13H** when seen from above and is an area of a white portion surrounded by the hatched region in FIGS. **16** through **18****.**

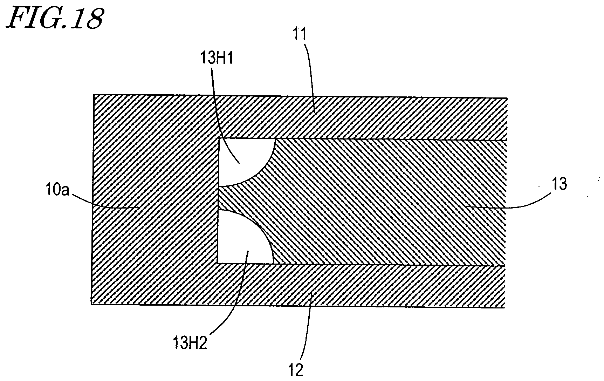

FIGS. **15** through **17B** each show a structure having only one hole **13H** in the vicinity of the attaching section **10a.** As shown in FIG. **18****,** there may be a hole **13H1** in the vicinity of an intersection of the inner side wall **11** and the attaching section **10a** and a hole **13H2** in the vicinity of an intersection of the outer side wall **12** and the attaching section **10a.** In order to enhance the effect of suppressing the generation of casting defects, it is preferable that at least a part of the hole **13H1** is located within 3 mm from the intersection of the inner side wall **11** and the attaching section **10a.** For the same purpose, it is preferable that at least a part of the hole **13H2** is located within 3 mm from the intersection of the outer side wall **12** and the attaching section **10a.**

Now, a method for producing the seat frame **100** will be described. The seat frame **100** can be preferably produced by, for example, diecasting. Diecasting, which is a casting method using a die, provides a high size precision and so is suitable to mass production.

For forming the seat frame **100** of a magnesium alloy, it is preferable to use an Mg-Al-Mn type alloy as the magnesium alloy. Especially in order to guarantee the ductility, it is preferable to use an Mg-Al-Mn type alloy containing 3 wt. % or higher and 9 wt. % or lower of Al and 0.1 wt.% or higher and 6.5 wt.% or lower of Mn. For example, AM60B alloy of the ASTM Standards (an Mg-Al-Mn type alloy containing 5.5 to 6.5 wt. % of Al, 0.22 wt. % or lower of Zn, 0.25 to 0.5 wt.% of Mn, 0.1 wt.% or lower of Si, 0.01 wt.% or lower of Cu, 0.002 wt.% or lower of Ni, 0.005 wt.% or lower of Fe, and 0.02 wt.% or lower of other impurities) is preferably usable.

For forming the seat frame **100** of an aluminum alloy, it is preferable to use an Al-Si-Mg type alloy as the aluminum alloy. It is more preferable to use an Al-10Si-1Mg alloy.

The seat frame **100** can also be preferably produced by thixo-molding. According to thixo-molding, a metal material in a semi-solid state is injected into a die to be molded. In this specification, even a metal material in a semi-solid state is also referred to as "molten metal" unless otherwise specified. The present invention is preferably applicable to the seat frame **100** produced by a method of injecting a molten metal into a die at a high speed and a high pressure such as diecasting, thixo-molding or the like.

As described above, the present invention can suppress the generation of a casting defect which would otherwise occur to a seat frame when being molded using a magnesium alloy or an aluminum alloy. Therefore, the present invention can realize a lightweight seat frame for a motorcycle at low cost. A motorcycle including the lightweight seat frame according to the present invention provides superb running performance.

The present invention can suppress the generation of a casting defect which would otherwise occur to frame members of a seat frame when being formed of a magnesium alloy or an aluminum alloy by casting. The seat frame according to the present invention can be produced to be lightweight and at low cost, and so is preferably usable for various types of saddle-riding type transporters including motorcycles.

While the present invention has been described with respect to preferred embodiments thereof, it will be apparent to those skilled in the art that the disclosed invention may be modified in numerous ways and may assume many embodiments other than those specifically described above.

## Claims

1. A seat frame (100) for a saddle-riding type transporter (200), the seat frame (100) comprising a pair of frame members (10R, 10L) formed of a magnesium alloy or an aluminum alloy by casting;
wherein:
the pair of frame members (10R, 10L) each include a first side wall (11), a second side wall (12) located outer with respect to the first side wall (11) in a vehicle width direction (B), and a connecting wall (13) for connecting the first side wall (11) and the second side wall (12) to each other;
the connecting wall (13) includes a seat fixing section (13a, 13b, 13c) for fixing a seat;
the pair of frame members (10R, 10L) each include a first region (R1) in which a top end of the first side wall (11) and a top end of the second side wall (12) are connected to each other at the level of the top ends by the connecting wall (13), and a second region (R2) in which a portion below the top end of the first side wall (11) and a portion below the top end of the second side wall (12) are connected to each other at this level below the top ends by the connecting wall (13);
the seat fixing section(13a, 13b, 13c) is located in the first region (R1);
the pair of frame members (10R, 10L) each include an attaching section in a front portion thereof for attaching the seat frame (100) to a main frame (102);
the second region (R2) is located in the vicinity of the attaching section;
the attaching section includes a boss (10a, 10b) having a through-hole (10a1, 10b1); and **characterised in that** the central axis of the through-hole (10a1, 10b1) is located on an extension line of the connecting wall (13).

2. The seat frame (100) of claim 1, wherein:
the pair of frame members (10R, 10L) each further include a third region (R3) in which the top end of the first side wall (11) and a portion below the top end of the second side wall (12) are connected to each other by the connecting wall (13); and
the third region (R3) is located between the first region (R1) and the second region (R2).

3. The seat frame (100) of claim 1 or 2, wherein the second region (R2) extends to a position at least 50 mm away rearward from a central axis of the through-hole (10a1, 10b1).

4. The seat frame (100) of any one of claims 1 through 3, wherein in the second region (R2), a height from a top surface of the connecting wall (13) to the top end of the first side wall (11) and a height from the top surface of the connecting wall (13) to the top end of the second side wall (12) increase toward the attaching section.

5. The seat frame (100) of any one of claims 1 through 4, wherein at an end of the second region (R2) on the attaching section side, the height from the top surface of the connecting wall (13) to the top end of the first side wall (11) and the height from the top surface of the connecting wall (13) to the top end of the second side wall (12) are each 6 mm or larger.

6. The seat frame (100) of any one of claims 1 through 5, wherein the connecting wall (13) has a hole (13H) in the vicinity of the attaching section.

7. The seat frame (100) of claim 6, wherein the hole (13H)is a through-hole.

8. The seat frame (100) of any one of claims 1 through 7, wherein in the second region (R2), a distance between the first side wall (11) and the second side wall (12) is 12 mm or shorter.

9. The seat frame (100) of any one of claims 1 through 8, wherein the first side wall (11) and the second side wall (12) each have a thickness of 2 mm or larger.

10. The seat frame (100) of any one of claims 1 through 9, wherein in the second region (R2), the pair of frame members (10R, 10L) each include a curved portion curved with respect to a vehicle length direction.

11. A saddle-riding type transporter (200), comprising:
a seat (136); and
the seat frame (100) according to any one of claims 1 through 10 for supporting the seat (136).

## Patentansprüche

1. Ein Sitzrahmen (100) für eine Transportvorrichtung (200) vom Sattelfahrtyp, wobei der Sitzrahmen (100) ein Paar von Rahmenbauteilen (10R, 10L) aufweist, die durch Gießen aus einer Magnesiumlegierung oder einer Aluminiumlegierung gebildet sind;
wobei:
das Paar von Rahmenbauteilen (10R, 10L) jeweils eine erste Seitenwand (11), eine zweite Seitenwand (12), die sich in Bezug auf die erste Seitenwand (11) in einer Fahrzeugbreitenrichtung (B) weiter außen befindet, und eine Verbindungswand (13) zum Verbinden der ersten Seitenwand (11) und der zweiten Seitenwand (12) miteinander aufweist;
die Verbindungswand (13) einen Sitzfixierabschnitt (13a, 13b, 13c) zum Fixieren eines Sitzes aufweist;
das Paar von Rahmenbauteilen (10R, 10L) jeweils eine erste Region (R1), bei der ein oberes Ende der ersten Seitenwand (11) und ein oberes Ende der zweiten Seitenwand (12) auf der Ebene der oberen Enden durch die Verbindungswand (13) miteinander verbunden sind, und eine zweite Region (R2) aufweist, bei der ein Abschnitt unterhalb des oberen Endes der ersten Seitenwand (11) und ein Abschnitt unterhalb des oberen Endes der zweiten Seitenwand (12) auf dieser Ebene unterhalb der oberen Enden durch die Verbindungswand (13) miteinander verbunden sind;
der Sitzfixierabschnitt (13a, 13b, 13c) sich in der ersten Region (R1) befindet;
das Paar von Rahmenbauteilen (10R, 10L) jeweils einen Anbringungsabschnitt bei einem vorderen Abschnitt desselben zum Anbringen des Sitzrahmens (100) an einem Hauptrahmen (102) aufweist;
die zweite Region (R2) sich in der Nähe des Anbringungsabschnitts befindet;
der Anbringungsabschnitt einen Vorsprung (10a, 10b) mit einem Durchgangsloch (10a1, 10b1) aufweist; und
**dadurch gekennzeichnet, dass**:
die Mittelachse des Durchgangslochs (10a1, 10b1) sich an einer Erweiterungslinie der Verbindungswand (13) befindet.

2. Der Sitzrahmen (100) gemäß Anspruch 1, bei dem:
das Paar von Rahmenbauteilen (10R, 10L) jeweils ferner eine dritte Region (R3) aufweist, bei der das obere Ende der ersten Seitenwand (11) und ein Abschnitt unterhalb des oberen Endes der zweiten Seitenwand (12) durch die Verbindungswand (13) miteinander verbunden sind; und
die dritte Region (R3) sich zwischen der ersten Region (R1) und der zweiten Region (R2) befindet.

3. Der Sitzrahmen (100) gemäß Anspruch 1 oder 2, bei dem sich die zweite Region (R2) zu einer Position zumindest 50 mm von einer Mittelachse des Durchgangslochs (10a1, 10b1) weg nach hinten erstreckt.

4. Der Sitzrahmen (100) gemäß einem der Ansprüche 1 bis 3, bei dem in der zweiten Region (R2) eine Höhe von einer oberen Oberfläche der Verbindungswand (13) zu dem oberen Ende der ersten Seitenwand (11) und eine Höhe von der oberen Oberfläche der Verbindungswand (13) zu dem oberen Ende der zweiten Seitenwand (12) in Richtung des Anbringungsabschnitts zunehmen.

5. Der Sitzrahmen (100) gemäß einem der Ansprüche 1 bis 4, bei dem an einem Ende der zweiten Region (R2) an der Seite des Anbringungsabschnitts die Höhe von der oberen Oberfläche der Verbindungswand (13) zu dem oberen Ende der ersten Seitenwand (11) und die Höhe von der oberen Oberfläche der Verbindungswand (13) zu dem oberen Ende der zweiten Seitenwand (12) jeweils 6 mm oder mehr beträgt.

6. Der Sitzrahmen (100) gemäß einem der Ansprüche 1 bis 5, bei dem die Verbindungswand (13) ein Loch (13H) in der Nähe des Anbringungsabschnitts aufweist.

7. Der Sitzrahmen (100) gemäß Anspruch 6, bei dem das Loch (13H) ein Durchgangsloch ist.

8. Der Sitzrahmen (100) gemäß einem der Ansprüche 1 bis 7, bei dem in der zweiten Region (R2) eine Entfernung zwischen der ersten Seitenwand (11) und der zweiten Seitenwand (12) 12 mm oder weniger beträgt.

9. Der Sitzrahmen (100) gemäß einem der Ansprüche 1 bis 8, bei dem die erste Seitenwand (11) und die zweite Seitenwand (12) jeweils eine Dicke von 2 mm oder mehr aufweisen.

10. Der Sitzrahmen (100) gemäß einem der Ansprüche 1 bis 9, bei dem in der zweiten Region (R2) das Paar von Rahmenbauteilen (10R, 10L) jeweils einen gekrümmten Abschnitt aufweist, der in Bezug auf eine Fahrzeuglängenrichtung gekrümmt ist.

11. Eine Transportvorrichtung (200) vom Sattelfahrtyp, die folgende Merkmale aufweist:
einen Sitz (136); und
den Sitzrahmen (100) gemäß einem der Ansprüche 1 bis 10 zum Tragen des Sitzes (136).

## Revendications

1. Cadre de siège (100) pour un transporteur de type à selle (200), le cadre de siège (100) comprenant une paire d'éléments de cadre (10R, 10L) formés en un alliage de magnésium ou un alliage d'aluminium par moulage;
dans lequel:
la paire d'éléments de cadre (10R, 10L) comportent, chacun, une première paroi latérale (11), une deuxième paroi latérale (12) située à l'extérieur par rapport à la première paroi latérale (11) dans un sens de la largeur de véhicule (B), et une paroi de connexion (13) destinée à connecter l'une à l'autre la première paroi latérale (11) et la deuxième paroi latérale (12);
la paroi de connexion (13) comporte un segment de fixation de siège (13a, 13b, 13c) destiné à fixer un siège;
la paire d'éléments de cadre (10R, 10L) comportent, chacun, une première région (R1) dans laquelle une extrémité supérieure de la première paroi latérale (11) et une extrémité supérieure de la deuxième paroi latérale (12) sont connectées l'une à l'autre au niveau des extrémités supérieures par la paroi de connexion (13), et une deuxième région (R2) dans laquelle une partie au-dessous de l'extrémité supérieure de la première paroi latérale (11) et une partie au-dessous de l'extrémité supérieure de la deuxième paroi latérale (12) sont connectées l'une à l'autre à ce niveau au-dessous des extrémités supérieures par la paroi de connexion (13);
le segment de fixation de siège (13a, 13b, 13c) est situé dans la première région (R1);
la paire d'éléments de cadre (10R, 10L) comportent, chacun, un segment de fixation dans une partie avant de ces derniers destiné à fixer le cadre de siège (100) à un cadre principal (102);
la deuxième région (R2) est située au voisinage du segment de fixation;
le segment de fixation comporte un bossage (10a, 10b) présentant un trou traversant (10a1, 10b1); et
**caractérisé par le fait que** l'axe central du trou traversant (10a1, 10b1) est situé sur une ligne d'extension de la paroi de connexion (13).

2. Cadre de siège (100) selon la revendication 1, dans lequel:
la paire d'éléments de cadre (10R, 10L) comportent par ailleurs une troisième région (R3) dans laquelle l'extrémité supérieure de la première paroi latérale (11) et une partie au-dessous de l'extrémité supérieure de la deuxième paroi latérale (12) sont connectées l'une à l'autre par la paroi de connexion (13); et
la troisième région (R3) est située entre la première région (R1) et la deuxième région (R2).

3. Cadre de siège (100) selon la revendication 1 ou 2, dans lequel la deuxième région (R2) s'étend jusqu'à une position éloignée d'au moins 50 mm vers l'arrière d'un axe central du trou traversant (10a1, 1.0b1).

4. Cadre de siège (100) selon l'une quelconque des revendications 1 à 3, dans lequel, dans la deuxième région (R2), une hauteur d'une surface supérieure de la paroi de connexion (13) à l'extrémité supérieure de la première paroi latérale (11) et une hauteur de la surface supérieure de la paroi de connexion (13) à l'extrémité supérieure de la deuxième paroi latérale (12) augmente vers le segment de fixation.

5. Cadre de siège (100) selon l'une quelconque des revendications 1 à 4, dans lequel, à une extrémité de la deuxième région (R2) du côté du segment de fixation, la hauteur de la surface supérieure de la paroi de connexion (13) à l'extrémité de la première paroi latérale (11) et la hauteur de la surface supérieure de la paroi de connexion (13) à l'extrémité supérieure de la deuxième paroi latérale (12) sont, chacune, de 6 mm ou plus.

6. Cadre de siège (100) selon l'une quelconque des revendications 1 à 5, dans lequel la paroi de connexion (13) présente un trou (13H) au voisinage du segment de fixation.

7. Cadre de siège (100) selon la revendication 6, dans lequel le trou (13H) est un trou traversant.

8. Cadre de siège (100) selon l'une quelconque des revendications 1 à 7, dans lequel, dans la deuxième région (R2), une distance entre la première paroi latérale (11) et la deuxième paroi latérale (12) est de 12 mm ou moins.

9. Cadre de siège (100) selon l'une quelconque des revendications 1 à 8, dans lequel la première paroi latérale (11) et la deuxième paroi latérale (12) présentent, chacune, une épaisseur de 2 mm ou plus.

10. Cadre de siège (100) selon l'une quelconque des revendications 1 à 9, dans lequel, dans la deuxième région (R2), la paire d'éléments de cadre (10R, 10L) comportent, chacun, une partie courbe courbée par rapport à une direction de longueur de véhicule.

11. Transporteur de type à selle (200), comprenant:
un siège (136); et
le cadre de siège (100) selon l'une quelconque des revendications 1 à 10 destiné à supporter le siège (136).
